(19) Europäisches Patentamt / European Patent Office / Office européen des brevets

(11) **EP 3 422 514 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(51) Int Cl.:
**H02H 7/04** *(2006.01)* **H02H 3/42** *(2006.01)*

(21) Anmeldenummer: **17178649.4**

(22) Anmeldetag: **29.06.2017**

(54) **VERFAHREN UND ANORDNUNG ZUM ERKENNEN EINES WINDUNGSFEHLERS IN EINEM TRANSFORMATOR**

METHOD AND ASSEMBLY FOR DETECTING A WINDING DEFECT IN A TRANSFORMER

PROCÉDÉ ET AGENCEMENT DE DÉTECTION D'UNE ERREUR DE SPIRE DANS UN TRANSFORMATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.01.2019 Patentblatt 2019/01**

(73) Patentinhaber: **Siemens Aktiengesellschaft 80333 München (DE)**

(72) Erfinder:
• **Rebizant, Waldemar**
  **53-678 Wroclaw (PL)**
• **Schiel, Ludwig**
  **10627 Berlin (DE)**
• **Solak, Krzysztof**
  **55-330 Mrozow (PL)**
• **Wiszniewski, Andrzej**
  **51-144 Wroclaw (PL)**

(56) Entgegenhaltungen:
WO-A1-2005/064759    CN-B- 103 795 030
US-A- 5 170 308

• **JING MA ET AL: "A Two Terminal Network-Based Method for Discrimination Between Internal Faults and Inrush Currents", IEEE TRANSACTIONS ON POWER DELIVERY, IEEE SERVICE CENTER, NEW YORK, NY, US, Bd. 25, Nr. 3, 1. Juli 2010 (2010-07-01), Seiten 1599-1605, XP011298530, ISSN: 0885-8977**

**Beschreibung**

Die Erfindung betrifft ein Verfahren zum Erkennen eines Windungsfehlers in einem Transformator eines elektrischen Energieversorgungsnetzes, bei dem auf der Oberspannungsseite und der Unterspannungsseite des Transformators phasenbezogene Strommesswerte erfasst werden und ein Fehlersignal erzeugt wird, wenn unter Verwendung der Strommesswerte ein Windungsfehler in dem Transformator erkannt worden ist, wobei auf der Ober- und der Unterspannungsseite des Transformators phasenbezogene Spannungsmesswerte erfasst werden und das Fehlersignal erzeugt wird, wenn unter Verwendung der Strom- und Spannungsmesswerte ein Windungsfehler in dem Transformator erkannt worden ist.

Der Schutz von Transformatoren in Energieversorgungsnetzen erfolgt heute mit einer Vielzahl von Schutzverfahren. Neben dem sogenannten Buchholzschutz, bei dem die Gasbildung im Transformatoröl überwacht wird, wird heutzutage vor allem der Differentialschutz eingesetzt, bei dem am Schutzobjekt ermittelte Differenzströme ausgewertet werden. Als Reserveschutz werden Überstromschutzverfahren, Erdfehlerdifferentialschutz und, je nach Leistungsgröße, auch der Impedanzschutz verwendet.

Die Fehlerarten in Transformatoren sind sehr vielfältig, da hierbei insbesondere auch interne Fehler auftreten können, die durch Kurzschlüsse zwischen den Windungen der Transformatorwicklungen hervorgerufen werden.

Windungsschlüsse können beispielsweise beim Einschalten der Transformatoren auftreten, da die auftretenden hohen Einschaltströme in den Wicklungen starke Vibrationen und damit starke mechanische Belastungen erzeugen, die zu den Windungsschlüssen führen können.

Die Erkennung von Windungsfehlern in Transformatoren erfordert einen empfindlichen Schutzmechanismus. Bei vielen der oben genannten Schutzverfahren sind interne Fehler nur schwer erkennbar, da zwar innerhalb einer kurzgeschlossenen Windung ein sehr hoher Strom fließen kann, dieser von außen aber kaum messbar ist. Somit sind Windungsfehler im Allgemeinen schwierig zu erkennen, da sie nur einen sehr kleinen Anstieg des Stromes an den Klemmen des Transformators verursachen. Der Strom an der Fehlerstelle ist wegen kurzgeschlossener Windungen hingegen sehr hoch und sehr gefährlich für die Transformatoren. Die heutzutage üblicherweise eingesetzten Schutzeinrichtungen erfassen die Leiterströme an beiden Seiten des Transformators und detektieren einen inneren Fehler durch den im Falle eines Windungsschlusses auftretenden Differenzstrom, wodurch im Allgemeinen jedoch keine ausreichende Empfindlichkeit erzielt wird, um Windungsschlüsse frühzeitig zu erkennen. Daher müssen sich bei herkömmlichen Schutzprinzipien interne Fehler in Transformatoren soweit ausweiten, dass sie von außen über den Differenzstrom oder Überströme erkennbar sind.

Aus der US Patentschrift US 7,812,615 B2 ist ein Verfahren zum Erkennen eines Windungsschlusses in einem Transformator bekannt; dieses Verfahren basiert auf der Bestimmung des Gegensystemstromes auf der Ober- und Unterspannungsseite des Transformators.

Auch aus der US Patentschrift US 7,903,381 B2 ist ein Schutzverfahren bekannt, das mit Gegensystemströmen arbeitet.

Ein gattungsgemäßes Verfahren ist beispielsweise aus der Veröffentlichung von JING MA ET AL: "A Two Terminal Network-Based Method for Discrimination Between Internal Faults and Inrush Currents", IEEE TRANSACTIONS ON POWER DELIVERY, IEEE SERVICE CENTER, NEW YORK, NY, US, Bd. 25, Nr. 3, 1. Juli 2010 (2010-07-01), Seiten 1599-1605, XP011298530, ISSN: 0885-8977 oder aus der US 5 170 308 A bekannt.

Bei den bekannten Verfahren kann bereits eine gewisse Verbesserung der Empfindlichkeit erreicht werden.

Ausgehend von einem Verfahren der eingangs genannten Art stellt liegt der Erfindung die Aufgabe zugrunde, eine möglichst empfindliche Erkennung eines Windungsfehlers in einem Transformator zu ermöglichen.

Dies wird gemäß der vorliegenden Erfindung durch ein Verfahren nach Patentanspruch 1 und eine Anordnung nach Patentanspruch 8 gelöst.

Hierzu ist hinsichtlich des Verfahrens vorgesehen, dass sowohl für die Oberspannungsseite als auch für die Unterspannungsseite des Transformators aus den phasenbezogenen Strommesswerten jeweilige Gegensystemströme und sowohl für die Oberspannungsseite als auch für die Unterspannungsseite des Transformators aus den phasenbezogenen Spannungsmesswerten jeweilige Gegensystemspannungen bestimmt werden und ein Windungsfehler anhand der jeweiligen Gegensystemströme und Gegensystemspannungen erkannt wird.

Durch die Hinzunahme der Spannungsinformation zu der Strominformation kann die Empfindlichkeit der Erkennung des Windungsfehlers gesteigert werden. Erfindungsgemäß ist vorgesehen, dass sowohl für die Oberspannungsseite als auch für die Unterspannungsseite des Transformators aus den phasenbezogenen Strommesswerten jeweilige Gegensystemströme und sowohl für die Oberspannungsseite als auch für die Unterspannungsseite des Transformators aus den phasenbezogenen Spannungsmesswerten jeweilige Gegensystemspannungen bestimmt werden und ein Windungsfehler anhand der jeweiligen Gegensystemströme und Gegensystemspannungen erkannt wird.

Die Verwendung von Gegensystemgrößen ermöglicht eine besonders empfindliche Erkennung von Windungsfehlern, weil sich Fehlerzustände besonders deutlich im Gegensystem abbilden.

In diesem Zusammenhang wird es als vorteilhaft angesehen, wenn für die Oberspannungsseite aus dem Gegensystemstrom und der Gegensystemspannung eine oberspannungsseitige Gegensystemleistung bestimmt wird und für die Unterspannungsseite aus dem Gegensystemstrom und der Gegensystemspannung eine unterspannungsseitige Gegensystemleistung bestimmt wird und ein Windungsfehler anhand der oberspannungsseitigen und der unterspannungsseitigen Gegensystemleistungen erkannt wird.

Hierdurch kann - insbesondere im Vergleich zur alleinigen Betrachtung des Stroms - ein besonders empfindliches Kriterium zur Erkennung von Windungsfehlern bereitgestellt werden, da sich sowohl Einflüsse des Fehlers auf die Gegensystemspannung als auch solche auf den Gegensystemstrom deutlich in der Gegensystemleistung bemerkbar machen.

Konkret kann gemäß einer weiteren vorteilhaften Ausführungsform des erfindungsgemäßen Verfahrens in diesem Zusammenhang vorgesehen sein, dass zur Erkennung eines Windungsfehlers eine Richtung untersucht wird, in die die ober- und unterspannungsseitige Gegensystemleistung hinsichtlich des Transformators zeigen, und ein Windungsfehler erkannt wird, wenn sowohl die oberspannungsseitige als auch die unterspannungsseitige Gegensystemleistung in die Richtung des Transformators zeigen.

Je nach der Lage des Gegensystemstroms im Verhältnis zur Gegensystemspannung lässt sich nämlich eine Richtung für die Gegensystemleistung festlegen. Ein Windungsfehler wird dann erkannt, wenn beide Leistungsrichtungen zum Transformator zeigen. Die Fehlerrichtung ergibt sich dabei aus der Anschaltung der Messgrößen, die entsprechend der Anschaltung beim Differentialschutz gewählt ist. Im fehlerfreien Fall nehmen die Gegensystemgrößen den Wert 0 an. Bei inneren Fehlern zeigt die gemessene Fehlerrichtung anschaltungsbedingt auf den Transformator, wobei die Gegensystemleistung wie später beschrieben im dritten Quadranten des Auslösediagramms liegt, da generell bei internen Fehlern die Mitsystemleistung von der Ober- und der Unterspannungsseite in die Richtung des Transformators und die Gegensystemleistung in die Gegenrichtung fließt, weswegen die Gegensystemleistung im dritten Quadranten erscheint.

Eine weitere vorteilhafte Ausführungsform des erfindungsgemäßen Verfahrens sieht vor, dass zur Erkennung eines Windungsfehlers die Lage der ober- und unterspannungsseitigen Gegensystemleistungen in einem Auslösediagramm untersucht wird und ein Windungsfehler erkannt wird, wenn sowohl die oberspannungsseitige als auch die unterspannungsseitige Gegensystemleistung in einem einen internen Fehler angebenden Bereich des Auslösediagramms liegen.

Hierdurch kann besonders einfach ein einen Windungsfehler angebender Fehlerzustand erkannt werden, da hierzu lediglich die Lage des Wertes der Gegensystemleistung innerhalb eines Auslösediagramms betrachtet werden muss. Der einen Fehler kennzeichnende Bereich im Auslösediagramm kann beispielsweise durch eine oder mehrere Kennlinien festgelegt werden.

Eine weitere vorteilhafte Ausführungsform des erfindungsgemäßen Verfahrens sieht in diesem Zusammenhang vor, dass als Auslösediagramm eine durch den Realteil der Gegensystemleistung und den Imaginärteil der Gegensystemleistung aufgespannte komplexe Zahlenebene verwendet wird.

Konkret kann in diesem Zusammenhang beispielsweise vorgesehen sein, dass ein Windungsfehler dann erkannt wird, wenn sowohl die oberspannungsseitige als auch die unterspannungsseitige Gegensystemleistung im dritten Quadranten des Auslösebereichs liegen.

Hierdurch kann besonders einfach ein Windungsfehler von einem normalen Arbeitszustand des Transformators, bei dem die Gegensystemleistung im ersten Quadranten liegen würde, abgegrenzt werden.

Besonders einfach und effektiv lässt sich eine Erkennung eines Windungsfehlers durchführen, indem zur Untersuchung der Lage der ober- und der unterspannungsseitigen Gegensystemleistung im Auslösediagramm allein das Vorzeichen des jeweiligen Real- und Imaginärteils der ober- und der unterspannungsseitigen Gegensystemleistung betrachtet wird.

Hierbei sind nämlich anstelle der konkreten Zahlenwerte des Real- und des Imaginärteils lediglich deren Vorzeichen zu bestimmen, wodurch die Berechnung vereinfacht ausgeführt werden kann.

Die oben genannte Aufgabe wird auch durch eine Anordnung zur Erkennung eines Windungsfehlers in einem Transformator eines elektrischen Energieversorgungsnetzes mit einer Messeinrichtung, die zur Erkennung eines Windungsfehlers in einem Transformator eines elektrischen Energieversorgungsnetzes, mit einer Messeinrichtung, die zur Erfassung von auf der Ober- und der Unterspannungsseite des Transformators gemessenen phasenbezogenen Strommesswerten eingerichtet ist und mit einer Auswerteinrichtung, die zur Erkennung eines Windungsfehlers in dem Transformator und zur Erzeugung eines den Windungsfehler angebenden Fehlersignals eingerichtet ist, wobei die Messeinrichtung auch zur Erfassung von auf der Ober- und der Unterspannungsseite des Transformators gemessenen phasenbezogenen Spannungsmesswerten eingerichtet ist und die Auswerteinrichtung zur Erkennung des Windungsfehlers unter Verwendung der Strom- und Spannungsmesswerte eingerichtet ist.

Erfindungsgemäß ist vorgesehen, dass die Auswerteinrichtung dazu eingerichtet ist, sowohl für die Oberspannungsseite als auch für die Unterspannungsseite des Transformators aus den phasenbezogenen Strommesswerten jeweilige Gegensystemströme und sowohl für die Oberspannungsseite als auch für die Unterspannungsseite des Transformators aus den phasenbezogenen Spannungsmesswerten jeweilige Gegensystemspannungen zu bestimmen und

einen Windungsfehler anhand der jeweiligen Gegensystemströme und Gegensystemspannungen zu erkennen. Konkret kann vorgesehen sein, dass die Anordnung Bestandteil eines Schutzgerätes zur Überwachung des Transformators ist.

Hinsichtlich der erfindungsgemäßen Anordnung gelten alle zu dem erfindungsgemäßen Verfahren voranstehend und nachfolgend gemachten Ausführungen und umgekehrt in entsprechender Weise, insbesondere ist die erfindungsgemäße Anordnung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Anordnung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Anordnung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen

Figuren 1-3        Beispiele von Windungsfehlern in einem Transformator;

Figur 4        ein schematisches Ausführungsbeispiel einer Anordnung zur Erkennung eines Windungsfehlers;

Figur 5        ein Ablaufdiagramm zur Erläuterung eines Ausführungsbeispiels eines Verfahrens zur Erkennung eines Windungsfehlers; und

Figur 6        ein Ausführungsbeispiel eines Auslösediagramms zur Erkennung eines Windungsfehlers.

Dabei stehen gleiche Bezugszeichen in den Figuren für identische oder vergleichbare Komponenten.

Windungsfehler in Transformatoren von Energieversorgungsnetzen stellen besondere Anforderungen an die den Transformator überwachende Schutztechnik. Zwar können nämlich innerhalb des Transformators zwischen den durch einen Windungsschluss fehlerhaft verbundenen Windungen durchaus hohe Ströme fließen. Diese sind an den äußeren Klemmen des Transformators jedoch kaum messbar und können daher mit herkömmlichen Schutzkonzepten, wie einem Differentialschutz oder einem Überstromschutz, nur schwer erkannt werden.

Windungsfehler entstehen beispielsweise durch starke mechanische Belastungen, z.B. Vibrationen, innerhalb des Transformators und durch Alterung der Isolierung zwischen den Windungen. Die zwischen den fehlerhaften Windungen fließenden hohen Ströme können zu einer lokalen Überhitzung und zu einer Ausbreitung des Fehlers im Transformator führen und sind daher durch eine den Transformator überwachende Schutzeinrichtung möglichst frühzeitig zu erkennen.

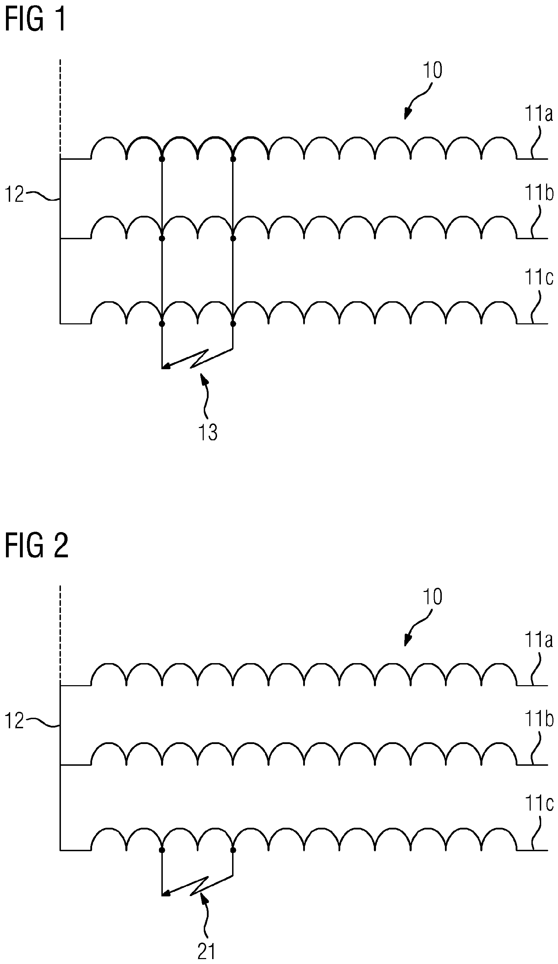

Figuren 1 bis 3 zeigen Beispiele von Windungsfehlern. Hierzu ist beispielhaft eine Wicklung 10 eines ansonsten nicht dargestellten Transformators gezeigt, bei der einzelne Phasenwicklungen 11a, 11b, 11c mit einem gemeinsamen Sternpunkt 12 verbunden sind. Selbstverständlich kommen auch andere Schaltungskonfigurationen, z.B. eine Dreiecksschaltung in Frage.

In Figur 1 ist beispielhaft ein Windungsfehler 13 gezeigt, der als Kurzschluss an Windungen paralleler Phasenwicklungen ausgebildet ist.

In Figur 2 ist beispielhaft ein Windungsfehler 21 gezeigt, der als Kurzschluss an Windungen einer einzelnen Phasenwicklung ausgebildet ist.

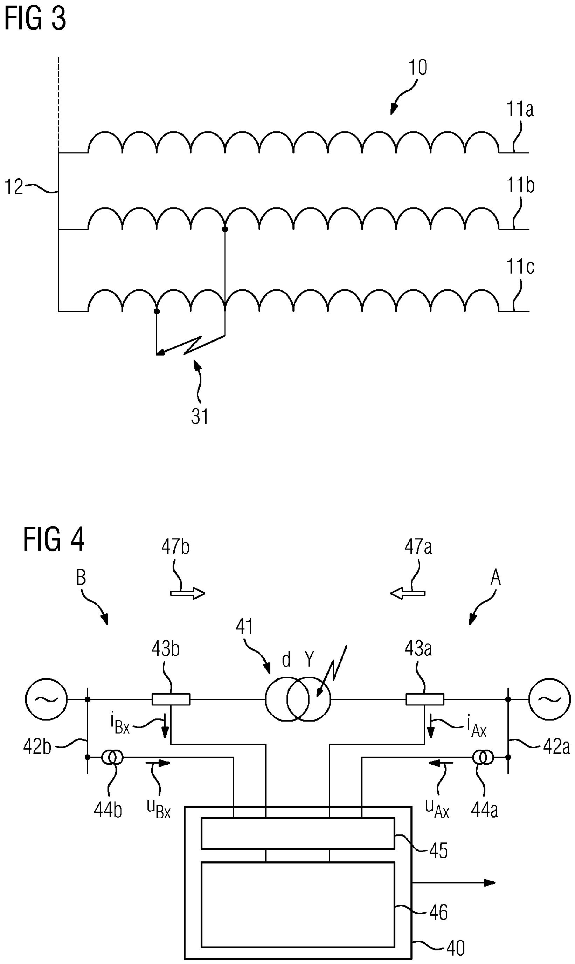

In Figur 3 ist schließlich beispielhaft ein Windungsfehler 31 gezeigt, der als Kurzschluss zwischen Windungen zweier paralleler Phasenwicklungen ausgebildet ist.

Insbesondere in den in Figuren 1 und 3 gezeigten Fehlerfällten sind die entstehenden Fehlerströme von außen kaum messbar.

Figur 4 zeigt eine Anordnung 40 zur empfindlichen Erkennung eines Windungsfehlers in einem lediglich schematisch angedeuteten Transformator 41. Bei dem Ausführungsbeispiel der Figur 4 ist der Transformator in Stern-Dreiecks-Schaltung geschaltet. Andere Konfigurationen sind selbstverständlich ebenfalls möglich. Zur Vereinfachung ist in Figur 4 eine einphasige Darstellung gezeigt. Diese steht stellvertretend für ein Mehrphasensystem, insbesondere ein Dreiphasensystem.

Der Transformator ist gemäß Figur 4 zwischen einer Sammelschiene 42a auf der Oberspannungsseite A und einer Sammelschiene 42b auf der Unterspannungsseite B vorgesehen. Vorliegend ist der Transformator in Schaltgruppe Yd11 geschaltet. Andere Schaltgruppen sind im Rahmen der Erfindung ebenfalls möglich. Mit Stromwandlern 43a und 43b wird sowohl auf der Oberspannungsseite A als auch auf der Unterspannungsseite B an den Klemmen des Transformators 41 die in den einzelnen Phasen (x = 1, 2, 3) fließenden Ströme $i_{Ax}$ und $i_{Bx}$ gemessen. Mit Spannungswandlern 44a und 44b wird sowohl auf der Oberspannungsseite A als auch auf der Unterspannungsseite B des Transformators 41 die an den einzelnen Phasen anliegende Spannung $u_{Ax}$ und $u_{Bx}$ gemessen. Die gemessenen Ströme und Spannungen werden einer Messeinrichtung 45 der Anordnung 40 zugeführt.

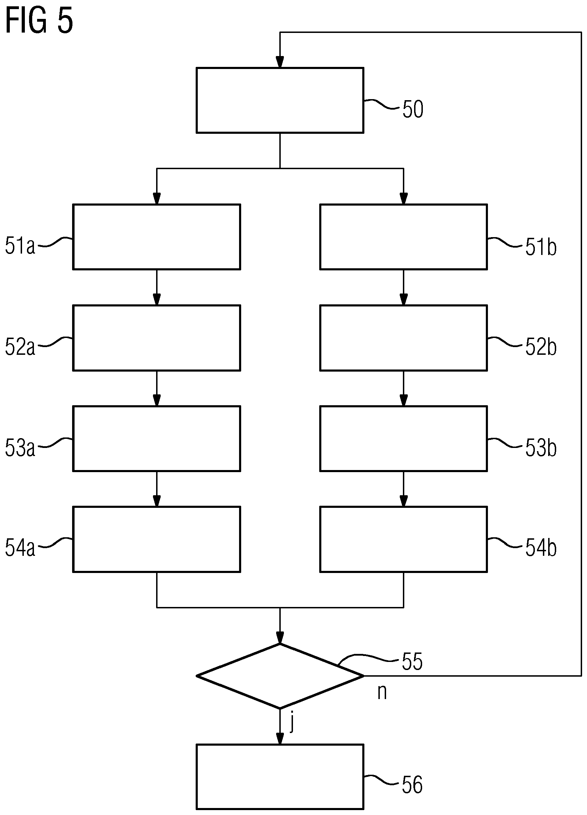

Die in der Anordnung 40 ablaufenden Verfahrensschritte werden nachfolgend unter Hinzunahme der Figur 5 erläutert, die ein Ablaufschema eines Ausführungsbeispiels eines Verfahrens zur Erkennung einer Windungsfehlers zeigt. Die Verfahrensschritte sind der besseren Übersicht halber für die Oberspannungsseite A und die Unterspannungsseite B getrennt dargestellt.

Das Verfahren beginnt mit Schritt 50. In Schritt 51a werden von der Messeinrichtung 45 (vgl. Figur 4) phasenbezogene Strommesswerte $i_{Ax}$ und Spannungsmesswerte $u_{Ax}$ der Oberspannungsseite A erfasst. Dazu können beispielsweise die von dem Stromwandler 43a und dem Spannungswandler 44a bereitgestellten Messsignale abgetastet und digitalisiert werden. Es besteht jedoch auch die Möglichkeit, dass von den Wandlern 43a, 44a bereits digitale Messsignale bereitgestellt und an die Anordnung 40 übertragen werden.

In entsprechender Weise werden in Schritt 51b von der Messeinrichtung 45 phasenbezogene Strommesswerte $i_{Bx}$ und Spannungsmesswerte $u_{Bx}$ der Unterspannungsseite B erfasst.

In einem nachfolgenden Schritt 52a werden die oberspannungsseitig erfassten Strom- und Spannungsmesswerte gefiltert und in orthogonale Komponenten (Sinus- und Cosinusanteile) zerlegt:

$$u_{Ax}^{\cos}(n) = \sum_{k=0}^{N-1} u_{Ax}(n-k) \cdot \cos\left[\left(\frac{N-1}{2}-k\right)\Omega_1\right]$$

$$u_{Ax}^{\sin}(n) = \sum_{k=0}^{N-1} u_{Ax}(n-k) \cdot \sin\left[\left(\frac{N-1}{2}-k\right)\Omega_1\right]$$

$$i_{Ax}^{\cos}(n) = \sum_{k=0}^{N-1} i_{Ax}(n-k) \cdot \cos\left[\left(\frac{N-1}{2}-k\right)\Omega_1\right]$$

$$i_{Ax}^{\sin}(n) = \sum_{k=0}^{N-1} i_{Ax}(n-k) \cdot \sin\left[\left(\frac{N-1}{2}-k\right)\Omega_1\right]$$

Dabei steht $\Omega_1$ für die abtastfrequenzbezogene relative Kreisfrequenz:

$$\Omega_1 = \frac{2\pi f_1}{f_S} \ .$$

Mit:

$u_{Ax}$    - Leiterspannungen von den Spannungswandlern der Oberspannungsseite A;
$i_{Ax}$    - Leiterströme von den Stromwandlern der Oberspanungsseite A;
x    - Phasenleiter 1, 2, 3;
$f_1$    - Frequenz der Grundschwingung (beispielsweise $f_1$=50Hz);
$f_S$    - Abtastfrequenz (beispielsweise $f_S$=1000Hz);
n    - Nummer des Abtastwertes;
N    - Fensterlänge des Messfensters (beispielsweise N=20 Werte pro Periode).

In entsprechender Weise werden in Schritt 52b die unterspannungsseitig erfassten Strom- und Spannungsmesswerte gefiltert und in orthogonale Komponenten zerlegt:

$$u_{Bx}^{\cos}(n)=\sum_{k=0}^{N-1}u_{Bx}(n-k)\cdot\cos\left[\left(\frac{N-1}{2}-k\right)\Omega_1\right]$$

$$u_{Bx}^{\sin}(n)=\sum_{k=0}^{N-1}u_{Bx}(n-k)\cdot\sin\left[\left(\frac{N-1}{2}-k\right)\Omega_1\right]$$

$$i_{Bx}^{\cos}(n)=\sum_{k=0}^{N-1}i_{Bx}(n-k)\cdot\cos\left[\left(\frac{N-1}{2}-k\right)\Omega_1\right]$$

$$i_{Bx}^{\sin}(n)=\sum_{k=0}^{N-1}i_{Bx}(n-k)\cdot\sin\left[\left(\frac{N-1}{2}-k\right)\Omega_1\right]$$

Mit:

$u_{Bx}$   - Leiterspannungen von den Spannungswandlern der Unterspannungsseite B;
$i_{Bx}$   - Leiterströme von den Stromwandlern der Unterspanungsseite B.

Unter Verwendung der in Schritt 52a bestimmten orthogonalen Komponenten können in Schritt 53a für die Oberspannungsseite A die orthogonalen Komponenten des Gegensystems (neg = negative sequence - Gegensystem) berechnet werden:

$$u_{A,neg}^{\cos}(n)=\frac{1}{3}\cdot\begin{bmatrix}1 & a_R & a_R\end{bmatrix}\begin{bmatrix}u_{A1}^{\cos}(n)\\u_{A2}^{\cos}(n)\\u_{A3}^{\cos}(n)\end{bmatrix}-\frac{1}{3}\cdot\begin{bmatrix}0 & -a_I & a_I\end{bmatrix}\begin{bmatrix}u_{A1}^{\sin}(n)\\u_{A2}^{\sin}(n)\\u_{A3}^{\sin}(n)\end{bmatrix}$$

$$u_{A,neg}^{\sin}(n)=\frac{1}{3}\cdot\begin{bmatrix}1 & a_R & a_R\end{bmatrix}\begin{bmatrix}u_{A1}^{\sin}(n)\\u_{A2}^{\sin}(n)\\u_{A3}^{\sin}(n)\end{bmatrix}+\frac{1}{3}\cdot\begin{bmatrix}0 & -a_I & a_I\end{bmatrix}\begin{bmatrix}u_{A1}^{\cos}(n)\\u_{A2}^{\cos}(n)\\u_{A3}^{\cos}(n)\end{bmatrix}$$

$$i_{A,neg}^{\cos}(n)=\frac{1}{3}\cdot\begin{bmatrix}1 & a_R & a_R\end{bmatrix}\begin{bmatrix}i_{A1}^{\cos}(n)\\i_{A2}^{\cos}(n)\\i_{A3}^{\cos}(n)\end{bmatrix}-\frac{1}{3}\cdot\begin{bmatrix}0 & -a_I & a_I\end{bmatrix}\begin{bmatrix}i_{A1}^{\sin}(n)\\i_{A2}^{\sin}(n)\\i_{A3}^{\sin}(n)\end{bmatrix}$$

$$i_{A,neg}^{\sin}(n)=\frac{1}{3}\cdot\begin{bmatrix}1 & a_R & a_R\end{bmatrix}\begin{bmatrix}i_{A1}^{\sin}(n)\\i_{A2}^{\sin}(n)\\i_{A3}^{\sin}(n)\end{bmatrix}+\frac{1}{3}\cdot\begin{bmatrix}0 & -a_I & a_I\end{bmatrix}\begin{bmatrix}i_{A1}^{\cos}(n)\\i_{A2}^{\cos}(n)\\i_{A3}^{\cos}(n)\end{bmatrix}$$

Mit $a_R$ = -0,5 und $a_I = \sqrt{3}/2$.

In entsprechender Weise können unter Verwendung der in Schritt 52b bestimmten orthogonalen Komponenten in Schritt 53b für die Unterspannungsseite B die orthogonalen Komponenten des Gegensystems berechnet werden:

$$u_{B,neg}^{\cos}(n)=\frac{1}{3}\cdot\begin{bmatrix}1 & a_R & a_R\end{bmatrix}\begin{bmatrix}u_{B1}^{\cos}(n)\\ u_{B2}^{\cos}(n)\\ u_{B3}^{\cos}(n)\end{bmatrix}-\frac{1}{3}\cdot\begin{bmatrix}0 & -a_I & a_I\end{bmatrix}\begin{bmatrix}u_{B1}^{\sin}(n)\\ u_{B2}^{\sin}(n)\\ u_{B3}^{\sin}(n)\end{bmatrix}$$

$$u_{B,neg}^{\sin}(n)=\frac{1}{3}\cdot\begin{bmatrix}1 & a_R & a_R\end{bmatrix}\begin{bmatrix}u_{B1}^{\sin}(n)\\ u_{B2}^{\sin}(n)\\ u_{B3}^{\sin}(n)\end{bmatrix}+\frac{1}{3}\cdot\begin{bmatrix}0 & -a_I & a_I\end{bmatrix}\begin{bmatrix}u_{B1}^{\cos}(n)\\ u_{B2}^{\cos}(n)\\ u_{B3}^{\cos}(n)\end{bmatrix}$$

$$i_{B,neg}^{\cos}(n)=\frac{1}{3}\cdot\begin{bmatrix}1 & a_R & a_R\end{bmatrix}\begin{bmatrix}i_{B1}^{\cos}(n)\\ i_{B2}^{\cos}(n)\\ i_{B3}^{\cos}(n)\end{bmatrix}-\frac{1}{3}\cdot\begin{bmatrix}0 & -a_I & a_I\end{bmatrix}\begin{bmatrix}i_{B1}^{\sin}(n)\\ i_{B2}^{\sin}(n)\\ i_{B3}^{\sin}(n)\end{bmatrix}$$

$$i_{B,neg}^{\sin}(n)=\frac{1}{3}\cdot\begin{bmatrix}1 & a_R & a_R\end{bmatrix}\begin{bmatrix}i_{B1}^{\sin}(n)\\ i_{B2}^{\sin}(n)\\ i_{B3}^{\sin}(n)\end{bmatrix}+\frac{1}{3}\cdot\begin{bmatrix}0 & -a_I & a_I\end{bmatrix}\begin{bmatrix}i_{B1}^{\cos}(n)\\ i_{B2}^{\cos}(n)\\ i_{B3}^{\cos}(n)\end{bmatrix}$$

Unter Verwendung der in Schritt 53a bestimmten orthogonalen Komponenten des Gegensystems der Oberspannungsseite A kann in Schritt 54a schließlich die oberspannungsseitige Gegensystemleistung $S_{A,neg}$ bestimmt werden:

$$S_{A,neg} = P_{A,neg} + jQ_{A,neg}.$$

Dabei berechnet sich der Realteil der oberspannungsseitigen Gegensystemleistung als deren Wirkleistung $P_{A,neg}$:

$$P_{A,neg}(n)=u_{A,neg}^{\cos}(n)\cdot i_{A,neg}^{\cos}(n)+u_{A,neg}^{\sin}(n)\cdot i_{A,neg}^{\sin}(n)$$

Der Imaginärteil der oberspannungsseitigen Gegensystemleistung berechnet sich entsprechend als deren Blindleistung $Q_{A,neg}$:

$$Q_{A,neg}(n)=u_{A,neg}^{\sin}(n)\cdot i_{A,neg}^{\cos}(n)-u_{A,neg}^{\cos}(n)\cdot i_{A,neg}^{\sin}(n)$$

In entsprechender Weise kann unter Verwendung der in Schritt 53b bestimmten orthogonalen Komponenten des Gegensystems der Unterspannungsseite B kann in Schritt 54b schließlich die unterspannungsseitige Gegensystemleistung $S_{B,neg}$ bestimmt werden:

$$S_{B,neg} = P_{B,neg} + jQ_{B,neg}.$$

Dabei berechnet sich der Realteil der unterspannungsseitigen Gegensystemleistung als deren Wirkleistung $P_{B,neg}$:

$$P_{B,neg}(n)=u_{B,neg}^{\cos}(n)\cdot i_{B,neg}^{\cos}(n)+u_{B,neg}^{\sin}(n)\cdot i_{B,neg}^{\sin}(n)$$

Der Imaginärteil der unterspannungsseitigen Gegensystemleistung berechnet sich entsprechend als deren Blindleistung $Q_{B,neg}$:

$$Q_{B,neg}(n) = u_{B,neg}^{\sin}(n) \cdot i_{B,neg}^{\cos}(n) - u_{B,neg}^{\cos}(n) \cdot i_{B,neg}^{\sin}(n)$$

Die in Schritten 54a und 54b bestimmten Gegensystemleistungen werden daraufhin an eine Auswerteinrichtung 46 der Anordnung 40 zur Erkennung eines Windungsfehlers übergeben. Die Auswerteinrichtung 46 prüft daraufhin in Schritt 55, ob die beiden Gegensystemleistungen auf einen Windungsfehler hindeuten.

Dazu kann beispielsweise die Richtung untersucht werden, in die die Gegensystemleistungen zeigen. Zeigen beide Richtungen auf den Transformator 41 hin, wie dies lediglich schematisch durch Pfeile 47a und 47b angedeutet ist, so wird ein innerhalb des Transformators liegender Windungsfehler erkannt.

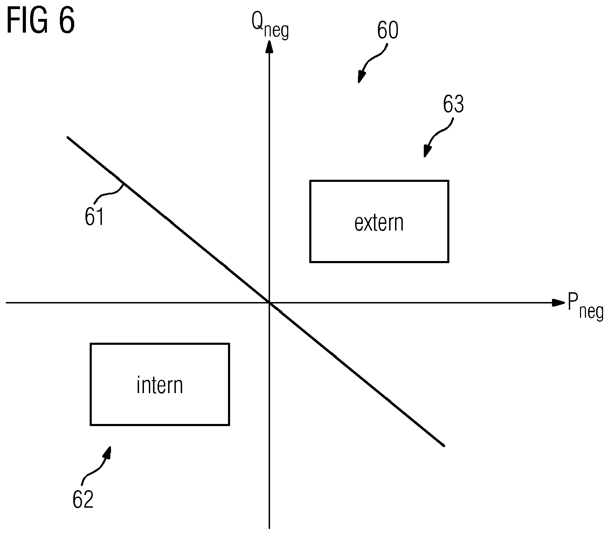

Alternativ kann die Lage der Werte der Gegensystemleistungen in einem Auslösediagramm untersucht werden. Hierzu zeigt Figur 6 beispielhaft ein mögliches Auslösediagramm 60 in Form einer durch den Realteil (Wirkleistung $P_{neg}$) und den Imaginärteil (Blindleistung $Q_{neg}$) der Gegensystemleistung aufgespannten komplexen Zahlenebene.

Eine Kennlinie 61 trennt einen Fehlerbereich 62, der einen internen Windungsfehler angibt, von einem Normalbereich 63, der einen Lastbereich oder einen Bereich externer (außerhalb der Transformatorwicklung) liegender Fehler angibt.

Unter Verwendung der jeweiligen Gegensystemwirk- und Gegensystemblindleistung kann die Lage der Gegensystemleistung jeweils für die Ober- und die Unterspannungsseite im Auslösediagramm 60 ermittelt werden. Liegen beide Gegensystemleistungen im Fehlerbereich 62, so wird ein Windungsfehler innerhalb des Transformators 41 erkannt.

Eine vereinfachte Möglichkeit der Erkennung eines Windungsfehlers besteht darin, lediglich die Vorzeichen der jeweiligen Real- und Imaginärteile der Gegensystemleistungen der Ober- und der Unterspannungsseite zu betrachten. Hierdurch kann die Lage der Gegensystemleistung innerhalb eines der vier Quadranten des Auslösediagramms eindeutig bestimmt werden. Weisen nun sowohl der Realteil als auch der Imaginärteil der jeweiligen oberspannungs- und unterspannungsseitigen Gegensystemleistung ein negatives Vorzeichen auf, so kann die Lage der jeweiligen Gegensystemleistung im dritten Quadranten und damit im Fehlerbereich eindeutig bestimmt werden, so dass in diesem Fall ein Windungsfehler erkannt wird.

Sofern in Schritt 55 entweder anhand der Richtungsbetrachtung oder anhand der Lage im Auslösediagramm ein Windungsfehler erkannt wird, wird schließlich in Schritt 56 ein entsprechendes Fehlersignal erzeugt. Das Fehlersignal kann beispielsweise dazu verwendet werden, um Leistungsschalter anzusteuern, die den Transformator vom restlichen Energieversorgungsnetz abtrennen.

Wenn in Schritt 55 hingegen kein Windungsfehler erkannt wird, beginnt das Verfahren erneut bei Schritt 50.

Im beschriebenen Ausführungsbeispiel wurden die Schritte 52a-54a sowie 52b-54b von der Messeinrichtung 45 der Anordnung 40 durchgeführt. Es ist jedoch auch im Rahmen der Erfindung möglich, dass einzelne oder alle dieser Schritte von der Auswerteinrichtung 46 durchgeführt werden.

Die Anordnung 40 gemäß Figur 4 kann beispielsweise Bestandteil eines auch andere Schutzalgorithmen, z. B. einen Differentialschutz oder einen Überstromschutz, ausführenden Schutzgerätes zur Überwachung des Transformators sein.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

**Patentansprüche**

1. Verfahren zum Erkennen eines Windungsfehlers in einem Transformator (41) eines elektrischen Energieversorgungsnetzes, bei dem

    - auf der Oberspannungsseite (A) und der Unterspannungsseite (B) des Transformators (41) phasenbezogene Strommesswerte erfasst werden; und
    - ein Fehlersignal erzeugt wird, wenn unter Verwendung der Strommesswerte ein Windungsfehler in dem Transformator (41) erkannt worden ist; wobei
    - auf der Ober- und der Unterspannungsseite des Transformators (41) phasenbezogene Spannungsmesswerte erfasst werden; und
    - das Fehlersignal erzeugt wird, wenn unter Verwendung der Strom- und Spannungsmesswerte ein Windungsfehler in dem Transformator (41) erkannt worden ist;

**dadurch gekennzeichnet, dass**
- sowohl für die Oberspannungsseite (A) als auch für die Unterspannungsseite (B) des Transformators (41) aus den phasenbezogenen Strommesswerten jeweilige Gegensystemströme und
- sowohl für die Oberspannungsseite (A) als auch für die Unterspannungsseite (B) des Transformators (41) aus den phasenbezogenen Spannungsmesswerten jeweilige Gegensystemspannungen bestimmt werden; und
- ein Windungsfehler anhand der jeweiligen Gegensystemströme und Gegensystemspannungen erkannt wird.

2. Verfahren nach Anspruch 1;
**dadurch gekennzeichnet, dass**

- für die Oberspannungsseite (A) aus dem Gegensystemstrom und der Gegensystemspannung eine oberspannungsseitige Gegensystemleistung bestimmt wird;
- für die Unterspannungsseite (B) aus dem Gegensystemstrom und der Gegensystemspannung eine unterspannungsseitige Gegensystemleistung bestimmt wird; und
- ein Windungsfehler anhand der oberspannungsseitigen und der unterspannungsseitigen Gegensystemleistungen erkannt wird.

3. Verfahren nach Anspruch 2,
**dadurch gekennzeichnet, dass**

- zur Erkennung eines Windungsfehlers eine Richtung untersucht wird, in die die ober- und unterspannungsseitige Gegensystemleistung hinsichtlich des Transformators (41) zeigen; und
- ein Windungsfehler erkannt wird, wenn sowohl die oberspannungsseitige als auch die unterspannungsseitige Gegensystemleistung in die Richtung des Transformators (41) zeigen.

4. Verfahren nach Anspruch 2 oder 3,
**dadurch gekennzeichnet, dass**

- zur Erkennung eines Windungsfehlers die Lage der ober- und unterspannungsseitigen Gegensystemleistungen in einem Auslösediagramm (60) untersucht wird; und
- ein Windungsfehler erkannt wird, wenn sowohl die oberspannungsseitige als auch die unterspannungsseitige Gegensystemleistung in einem einen internen Fehler angebenden Bereich des Auslösediagramms (60) liegen.

5. Verfahren nach Anspruch 4,
**dadurch gekennzeichnet, dass**

- als Auslösediagramm (60) eine durch den Realteil der Gegensystemleistung und den Imaginärteil der Gegensystemleistung aufgespannte komplexe Zahlenebene verwendet wird.

6. Verfahren nach Anspruch 5,
**dadurch gekennzeichnet, dass**

- ein Windungsfehler dann erkannt wird, wenn sowohl die oberspannungsseitige als auch die unterspannungsseitige Gegensystemleistung im dritten Quadranten des Auslösediagramms (60) liegen.

7. Verfahren nach einem der Ansprüche 3 bis 5,
**dadurch gekennzeichnet, dass**

- zur Untersuchung der Lage der ober- und der unterspannungsseitigen Gegensystemleistung im Auslösediagramm (60) allein das Vorzeichen des jeweiligen Real- und Imaginärteils der ober- und der unterspannungsseitigen Gegensystemleistung betrachtet wird.

8. Anordnung (40) zur Erkennung eines Windungsfehlers in einem Transformator (41) eines elektrischen Energieversorgungsnetzes, mit

- einer Messeinrichtung (45), die zur Erfassung von auf der Ober- und der Unterspannungsseite des Transformators (41) gemessenen phasenbezogenen Strommesswerten eingerichtet ist; und mit
- einer Auswerteinrichtung (46), die zur Erkennung eines Windungsfehlers in dem Transformator (41) und zur Erzeugung eines den Windungsfehler angebenden Fehlersignals eingerichtet ist; wobei
- die Messeinrichtung (45) auch zur Erfassung von auf der Ober- und der Unterspannungsseite des Transformators (41) gemessenen phasenbezogenen Spannungsmesswerten eingerichtet ist; und
- die Auswerteinrichtung (46) zur Erkennung des Windungsfehlers unter Verwendung der Strom- und Spannungsmesswerte eingerichtet ist;
**dadurch gekennzeichnet, dass**
- die Auswerteeinrichtung dazu eingerichtet ist, sowohl für die Oberspannungsseite (A) als auch für die Unterspannungsseite (B) des Transformators (41) aus den phasenbezogenen Strommesswerten jeweilige Gegensystemströme und sowohl für die Oberspannungsseite (A) als auch für die Unterspannungsseite (B) des Transformators (41) aus den phasenbezogenen Spannungsmesswerten jeweilige Gegensystemspannungen zu bestimmen; und
- einen Windungsfehler anhand der jeweiligen Gegensystemströme und Gegensystemspannungen zu erkennen.

9. Anordnung (40) nach Anspruch 8,
**dadurch gekennzeichnet, dass**

- die Anordnung (40) Bestandteil eines Schutzgerätes zur Überwachung des Transformators (41) ist.

**Claims**

1. Method for identifying a winding fault in a transformer (41) of an electrical energy supply grid, in which

- phase-related current measurement values are detected on the high-voltage side (A) and the low-voltage side (B) of the transformer (41); and
- a fault signal is generated when a winding fault in the transformer (41) has been identified using the current measurement values; wherein
- phase-related voltage measurement values are detected on the high-voltage and the low-voltage side of the transformer (41); and
- the fault signal is generated when a winding fault in the transformer (41) has been identified using the current and voltage measurement values;
**characterized in that**
- respective negative-phase-sequence system currents are determined from the phase-related current measurement values both for the high-voltage side (A) and for the low-voltage side (B) of the transformer (41) and
- respective negative-phase-sequence system voltages are determined from the phase-related voltage measurement values both for the high-voltage side (A) and for the low-voltage side (B) of the transformer (41); and
- a winding fault is identified based on the respective negative-phase-sequence system currents and negative-phase-sequence system voltages.

2. Method according to Claim 1,
**characterized in that**

- a high-voltage-side negative-phase-sequence system power is determined for the high-voltage side (A) from the negative-phase-sequence system current and the negative-phase-sequence system voltage;
- a low-voltage-side negative-phase-sequence system power is determined for the low-voltage side (B) from the negative-phase-sequence system current and the negative-phase-sequence system voltage; and
- a winding fault is identified based on the high-voltage-side and the low-voltage-side negative-phase-sequence system powers.

3. Method according to Claim 2,
**characterized in that**

- to identify a winding fault, a direction in which the high-voltage-side and low-voltage-side negative-phase-sequence system power point with respect to the transformer (41) is examined; and
- a winding fault is identified when both the high-voltage-side and the low-voltage-side negative-phase-sequence system power point in the direction of the transformer (41).

**4.** Method according to Claim 2 or 3,
**characterized in that**

- to identify a winding fault, the position of the high-voltage-side and low-voltage-side negative-phase-sequence system powers in a tripping diagram (60) is examined; and
- a winding fault is identified when both the high-voltage-side and the low-voltage-side negative-phase-sequence system power lie in a region of the tripping diagram (60) that indicates an internal fault.

**5.** Method according to Claim 4,
**characterized in that**

- a complex number plane spanned by the real part of the negative-phase-sequence system power and the imaginary part of the negative-phase-sequence system power is used as tripping diagram (60).

**6.** Method according to Claim 5,
**characterized in that**

- a winding fault is identified when both the high-voltage-side and the low-voltage-side negative-phase-sequence system power lie in the third quadrant of the tripping diagram (60).

**7.** Method according to one of Claims 3 to 5,
**characterized in that**

- to examine the position of the high-voltage-side and the low-voltage-side negative-phase-sequence system power in the tripping diagram (60), only the sign of the respective real and imaginary part of the high-voltage-side and the low-voltage-side negative-phase-sequence system power is considered.

**8.** Arrangement (40) for identifying a winding fault in a transformer (41) of an electrical energy supply grid, having

- a measurement device (45), which is configured to detect phase-related current measurement values measured on the high-voltage and the low-voltage side of the transformer (41); and having
- an evaluation device (46), which is configured to identify a winding fault in the transformer (41) and to generate a fault signal that indicates the winding fault; wherein
- the measurement device (45) is also configured to detect phase-related voltage measurement values measured on the high-voltage and the low-voltage side of the transformer (41); and
- the evaluation device (46) is configured to identify the winding fault using the current and voltage measurement values;
**characterized in that**
- the evaluation device is configured to determine respective negative-phase-sequence system currents from the phase-related current measurement values both for the high-voltage side (A) and for the low-voltage side (B) of the transformer (41) and to determine respective negative-phase-sequence system voltages from the phase-related voltage measurement values both for the high-voltage side (A) and for the low-voltage side (B) of the transformer (41); and
- to identify a winding fault based on the respective negative-phase-sequence system currents and negative-phase-sequence system voltages.

**9.** Arrangement (40) according to Claim 8,
**characterized in that**

- the arrangement (40) is a constituent part of a protective device for monitoring the transformer (41).

**Revendications**

**1.** Procédé de détection d'un défaut de spire dans un transformateur (41) d'un réseau d'alimentation en énergie électrique, dans lequel

- on relève des valeurs de mesure de courant rapportées aux phases du côté (A) de la tension haute et du côté (B) de la tension basse du transformateur (41) ; et

- on produit un signal de défaut, si, en utilisant les valeurs de mesure du courant, il a été détecté un défaut de spire dans le transformateur (41) ; dans lequel

- on relève des valeurs de mesure de tension rapportées à la phase du côté de la tension haute et du côté de la tension basse du transformateur (41) ; et

- on produit le signal de défaut, si, en utilisant les valeurs de mesure du courant et de la tension, il a été détecté un défaut de spire dans le transformateur (41) ;

**caractérisé en ce que**

- on détermine, à la fois pour le côté (A) de la tension haute et pour le côté (B) de la tension basse du transformateur (41) des courants respectifs du système inverse à partir des valeurs de mesure rapportées à la phase et

- on détermine, à la fois pour le côté (A) de la tension haute et pour le côté (B) de la tension basse du transformateur (41), des tensions respectives du système inverse à partir des valeurs de mesure de la tension rapportées à la phase et

- on détecte un défaut de spire à l'aide des courants de système inverse et des tensions de système inverse.

2.  Procédé suivant la revendication 1,
    **caractérisé en ce que**

    - on détermine, pour le côté (A) de la tension haute, une puissance de système inverse du côté de la tension haute, à partir du courant de système inverse et de la tension de système inverse ;

    - on détermine, pour le côté (B) de la tension basse, une puissance de système inverse du côté de la tension haute, à partir du courant de système inverse et de la tension de système inverse ;

    - on détecte un défaut de spire à l'aide des puissances de système inverse du côté de la tension haute et du côté de la tension basse.

3.  Procédé suivant la revendication 2,
    **caractérisé en ce que**

    - on étudie, pour détecter un défaut de spire, une direction dans laquelle pointe la puissance de système inverse du côté de la tension haute et du côté de la tension basse en ce qui concerne le transformateur (41) ; et

    - on détecte un défaut de spire, si, à la fois, la puissance de système inverse du côté de la tension haute et du côté de la tension basse pointent dans la direction du transformateur (41).

4.  Procédé suivant la revendication 2 ou 3,
    **caractérisé en ce que**

    - pour détecter un défaut de spire, on étudie la position de puissance de système inverse du côté de la tension haute et du côté de la tension basse dans un diagramme (60) de déclenchement ; et

    - on détecte un défaut de spire, si, à la fois, la puissance inverse du côté de la tension haute et du côté de la tension basse se trouvent dans un domaine indiquant un défaut interne du diagramme (60) de déclenchement.

5.  Procédé suivant la revendication 4,
    **caractérisé en ce que**

    - on utilise comme diagramme (6) de déclenchement un plan de nombres complexes comprenant la partie réelle de la puissance du système inverse et la partie imaginaire de la puissance de système inverse.

6.  Procédé suivant la revendication 5,
    **caractérisé en ce que**

    - on détecte un défaut de spire, si, à la fois, la puissance du côté de la tension haute et la puissance du côté de la tension basse se trouvent dans le troisième quadrant du diagramme (60) de déclenchement.

7.  Procédé suivant l'une des revendications 3 à 5,
    **caractérisé en ce que**

    - pour étudier la position de la puissance de système inverse du côté de la tension haute et du côté de la tension basse dans le diagramme (60) de déclenchement, on considère seulement le signe de la partie réelle et imaginaire respectif de la puissance de système inverse du côté de la tension haute et de la tension basse.

8. Système (40) de détection d'un défaut de spire dans un transformateur (41) d'un réseau d'alimentation en énergie électrique, comprenant

- un dispositif (45) de mesure, conçu pour détecter des valeurs de mesure de courant rapportées à la phase, mesurées du côté de la tension haute et de la tension basse du transformateur (41) et comprenant
- un dispositif (46) d'exploitation, conçu pour détecter un défaut de spire dans le transformateur (41) et pour produire un signal de défaut indiquant le défaut de spire ; dans lequel
- le dispositif (45) de mesure est conçu également pour relever des valeurs de mesure de tension rapportées à la phase, mesurées du côté de la tension haute et de la tension basse du transformateur (41) ; et
- le dispositif (46) d'exploitation est conçu pour détecter le défaut de spire en utilisant les valeurs de mesure de courant et de tension ;
**caractérisé en ce que**
- le dispositif d'exploitation est conçu pour déterminer, à la fois pour le côté (A) de la tension haute et le côté (B) de la tension basse du transformateur (41), des courants respectifs de système inverse à partir des valeurs de mesure de courant rapportées à la phase et, à la fois pour le côté (A) de la tension haute et pour le côté (B) de la tension basse du transformateur (41), des tensions de système inverse respectives à partir des valeurs de mesure de tension rapportées à la phase ; et
- pour détecter un défaut de spire à l'aide des courants de système inverse et des tensions de système inverse respectifs.

9. Système (40) suivant la revendication 8,
**caractérisé en ce que**

- l'agencement (40) fait partie d'un appareil de protection pour le contrôle du transformateur (41).

FIG 1

10

11a

12

11b

11c

13

FIG 2

10

11a

12

11b

11c

21

EP 3 422 514 B1

FIG 3

10
11a
11b
11c
12
31

FIG 4

47b
47a
B
A
41
d Y
43b
43a
$i_{Bx}$
$i_{Ax}$
42b
42a
44b
$u_{Bx}$
$u_{Ax}$
44a
45
46
40

15

## FIG 5

EP 3 422 514 B1

FIG 6

17

**IN DER BESCHREIBUNG AUFGEFÜHRTE DOKUMENTE**

**In der Beschreibung aufgeführte Patentdokumente**

- US 7812615 B2
- US 7903381 B2
- US 5170308 A

**In der Beschreibung aufgeführte Nicht-Patentliteratur**

- A Two Terminal Network-Based Method for Discrimination Between Internal Faults and Inrush Currents. **VON JING MA et al.** IEEE TRANSACTIONS ON POWER DELIVERY. IEEE SERVICE CENTER, 01. Juli 2010, vol. 25, 1599-1605